# EUROPÄISCHE PATENTANMELDUNG

(11) **EP 1 191 716 A2**
(43) Veröffentlichungstag der Anmeldung: **27.03.2002**
(21) Anmeldenummer: 01120105.0
(22) Anmeldetag: 21.08.2001
(51) Int. Cl.: H04B 10/155

(54) **Verfahren zur phasensynchronen Zuführung eines optischen Pulssignals mit einem elektrischen Datensignal**

(30) Priorität: 26.09.2000 DE 10047660
(71) Anmelder: SIEMENS AKTIENGESELLSCHAFT, 80333 München (DE)
(72) Erfinder: Glingener, Christoph, Dr., 83620 Feldkirchen-Westerham (DE); Gottwald, Erich, Dr., 83607 Holzkirchen (DE)

(57) **Zusammenfassung**

Ein optisches Pulssignals (ops) und ein elektrisches Datensignal (eds), die hinsichtlich eines elektrischen Taktsignals (ts) synchronisiert sind, werden einem elektro-optischen Modulator (EOM) zur Erzeugung eines optischen RZ-Übertragungssignals (RZ-S) zugeführt. Zur Regelung des phasensychronen Zuführung dieser wird ein Teil des optischen RZ-Übertragungssignals (oh) ausgekoppelt und der ausgekoppelte Teil (oh) in ein elektrisches Signal (es) umgesetzt. Anschließend wird die Leistung oder der Strom oder die Spannung des elektrischen Signals (es) in einem schmalen Frequenzband um die der halben Datenrate entsprechenden Frequenz bestimmt und anhand der ermittelten Leistung- oder Strom- oder Spannungwerte die phasensynchrone Zuführung des optischen Pulssignals (ops) und/oder des elektrischen Datensignals (eds) geregelt.

## Beschreibung

Die Erfindung betrifft ein Verfahren zur phasensynchronen Zuführung eines optischen Pulssignals und eines elektrischen Datensignals, die hinsichtlich eines elektrischen Taktsignals synchronisiert sind, an einen elektro-optischen Modulator zur Erzeugung eines optischen RZ(Return-to-Zero)-Übertragungssignals. Alternativ wird erfindungsgemäß ein Verfahren zur phasensynchronen Zuführung eines elektrischen Datensignals an einen elektro-optischen Modulator und/oder des in dem elektro-optischen Modulator aus einem optischen Signal und dem elektrischen Datensignal erzeugten optischen NRZ(Non-Return-to-Zero)-Übertragungssignals an einen Pulstransformer, der das optische NRZ-Übertragungssignal in ein optisches RZ(Return-to-Zero)-Übertragungssignal transformiert, betrachtet, wobei der Pulstransformer mit dem elektrischen Datensignal über ein elektrisches Taktsignal synchronisiert ist.

Bei optischen Übertragungssystemen, insbesondere Wavelength-Division-Multiplexing (WDM) Weitverkehr-Übertragungssystemen werden optische Übertragungssignale mit Datenraten von 10 Gigabit pro Sekunde und mehr übertragen. Hierfür werden die optischen Übertragungssignale beispielsweise gemäß dem "Return-to-Zero" (RZ)-Übertragungsformat kodiert. Das "Return-to-Zero"-Übertragungsformat bzw. Kodierungsformat von optischen Signalen hat im Vergleich zu dem "Non-Return-to-Zero" (NRZ)-Übertragungsformat insbesondere den Vorteil, daß bei beispielsweise einer Übertragungsrate von 40 Gbit/s in einem optischen Weitverkehrssystem bzw. optischen Übertragungssystem die regenerationsfrei überbrückbare Übertragungsstrecke nahezu verdoppelt werden kann - siehe hierzu insbesondere "Performance limits on nonlinear RZ and NRZ coded transmission at 10 and 40 Gbit/s on different fibers", C. Fürst, g. Mohs, H. Geiger, G. Fischer, Siemens AG, Advanced Transport Systems, OFC 2000, Baltimore, USA.

Zur Erzeugung von RZ-Übertragungssignalen geeignete optische Sendeeinheiten werden beispielsweise derart realisiert, daß ein optisches Pulssignal einer Pulssignalquelle, insbesondere einer optischen Laser-Pulssignalquelle, mit einem elektrischen Datensignal durch einen elektro-optischen Modulator moduliert wird. Hierzu ist insbesondere eine Synchronisation des elektrischen Datensignals und der Pulsquelle mit Hilfe eines elektrischen Taktsignals erforderlich.

Entsprechend sind Verfahren bekannt, bei denen ein optisches Signal beispielsweise einer Lasereinheit zunächst mit dem elektrischen Datensignal moduliert wird und hierdurch ein optisches NRZ-Übertragungssignal erzeugt wird, das anschließend durch einen Pulstransformator vom NRZ-Datenformat ins RZ-Datenformat transformiert wird. Analog zu dem oben beschriebenen Verfahren ist auch hier eine Synchronisation des elektrischen Datensignals und des Pulstransformators mit Hilfe eines elektrischen Taktsignals erforderlich.

Bei beiden vorgestellten Verfahren ist zusätzlich, im Gegensatz zur Erzeugung von NRZ-Übertragungssignalen, eine Phasensynchronisation zwischen der optischen Pulsquelle und dem elektro-optischen Modulator bzw. zwischen dem Pulstransformator und dem elektro-optischen Modulator erforderlich, d.h. das zur Erzeugung des optischen RZ-Übertragungssignals erforderliche optische Pulssignal und das elektrische Datensignal müssen, um Phasenfehlanpassungen zu vermeiden, dem eletro-optischen Modulator phasensynchron zugeführt werden. Alternativ müssen das bei der Erzeugung des optischen RZ-Übertragungssignals mit Hilfe eines Pulstransformers erforderliche optische NRZ-Übertragungssignal und das elektrische Datensignal dem Pulstransformer bzw. dem eletro-optischen Modulator phasensynchron zugeführt werden. Eine Phasenfehlanpassung würde innerhalb des optischen RZ-Übertragungssignals zu einer Reduzierung der Signalamplitude der gesendeten binären "Einsen" und zu einer Erhöhung der Signalamplitude der gesendeten binären "Nullen" führen, wodurch die regenerationsfrei überbrückbare Übertragungsstreckenlänge des optischen RZ-Übertragungssignal erheblich verkürzt wird.

Die Aufgabe der Erfindung ist insbesondere darin zu sehen, ein Verfahren zur phasensynchronen Zuführung eines optischen Pulssignals bzw. eines optischen NRZ-Übertragungssignals und eines elektrischen Datensignals an einen elektro-optischen Modulator anzugeben. Die Aufgabe wird ausgehend von einem Verfahren gemäß den Merkmalen des Oberbegriffs des Patentanspruches 1 oder 2 durch dessen kennzeichnende Merkmale gelöst.

Der wesentliche Vorteil des erfindungsgemäßen Verfahrens ist insbesondere darin zu sehen, daß ein Teil des optischen RZ-Übertragungssignals ausgekoppelt wird und der ausgekoppelte Teil des optischen RZ-Übertragungssignals in ein elektrisches Signal umgesetzt wird. Anschließend wird die Leistung oder der Strom oder die Spannung des elektrischen Signals in einem Frequenzband bestimmt, dessen Mittenfrequenz der halben Datenrate entspricht und anhand der ermittelten Leistungs- oder Strom- oder Spannungswerte die phasensynchrone Zuführung des optischen Pulssignals und/oder des elektrischen Datensignals geregelt. Bei der erfindungsgemäßen Regelung wird die Spektralkomponente des ausgekoppelten Teils des optischen RZ-Übertragungssignals bei der halben Datenrate mit Hilfe eines schmalbandigen Filters ausgefiltert und beispielsweise deren Leistung oder Strom oder Spannung ermittelt. Der gefilterte Teil der 0-1-Folge des umgesetzten RZ-Übertragungssignals wird im wesentlichen durch ein sinusförmiges Signal mit einer der halben Datenrate entsprechenden Frequenz repräsentiert, dessen Spannungsamplitude oder Leistungamplitude oder Stromamplitude bei einer phasensynchronen Zuführung ein Maximum aufweist. Durch die Auswertung beispielsweise der ermittelten Leistungs- oder Strom- oder Spannungwerte wird auf vorteilhafte Weise ein Regelsignal gebildet, mit dessen Hilfe ein regelbares elektrisches und/oder optisches Phasenstellglied geregelt wird. Somit wird besonders einfach eine phasensychrone Zuführung des optischen Pulssignals und des elektrischen Datensignals an einen elektro-optischen Modulator zur Erzeugung eines nahezu vollständig "durchmodulierten" optischen RZ-Übertragungssignals ermöglicht.

Vorteilhaft wird alternativ erfindungsgemäß ein Verfahren zur phasensynchronen Zuführung eines elektrischen Datensignals an einen elektro-optischen Modulator und/oder des in dem elektro-optischen Modulator aus einem optischen Signal und dem elektrischen Datensignal erzeugten optischen NRZ-Übertragungssignals an einen Pulstransformer, der das NRZ-Übertragungssignal in ein optisches RZ-Übertragungssignal transformiert, wobei der Pulstransformer mit dem elektrischen Datensignal über ein elektrisches Taktsignal synchronisiert ist, angegeben, bei dem wiederum ein Teil des optischen RZ-Übertragungssignals ausgekoppelt und der ausgekoppelte Teil des optischen RZ-Übertragungssignals in ein elektrisches Signal umgesetzt wird. Anschließend wird die Leistung oder der Strom oder die Spannung des elektrischen Signals in einem Frequenzband um die der halben Datenrate entsprechenden Mittenfrequenz bestimmt und anhand der ermittelten Leistung- oder Strom- oder Spannungwerte die phasensynchrone Zuführung des optischen Signals und/oder des NRZ-Übertragungssignals geregelt. Besonders vorteilhaft wird bei der alternativen Erzeugung eines optischen RZ-Übertragungssignals das erfindungsgemäße Regelverfahren zur phasensynchronen Zuführung des elektrischen Datensignals und/oder des gebildeten optischen NRZ-Übertragungsignals eingesetzt.

Ein weiterer Vorteil des erfindungsgemäßen Verfahrens ist darin zu sehen, daß der ausgekoppelte Teil des optischen RZ-Übertragungssignals mit Hilfe eines opto-elektrischen Wandlers, insbesondere einer Photodiode, in ein elektrisches Signal umgesetzt wird und daß die Bestimmung der Leistung oder des Stromes oder der Spannung des elektrischen Signals für die der halben Datenrate entsprechenden Frequenz mit Hilfe eines elektrischen Bandpaßfilters oder mit Hilfe eines schmalbandigen elektrischen Verstärkers durchgeführt wird. Vorteilhaft kann der ausgekoppelte Teil des optischen RZ-Übertragungssignals beispielsweise mit Hilfe einer schnellen Photodiode in ein elektrisches Signal umgesetzt werden und der für das erfindungsgemäße Regelungsverfahren relevante, bei der halben Datenrate liegende Spektralanteil des elektrischen Signals kostengünstig durch ein schmalbandiges elektrisches Bandpaßfilter oder einen schmalbandigen Verstärker, dessen Durchlaßbereich bzw. Verstärkungsbereich die halbe Datenrate einschließt, ermittelt werden.

In einer weiteren vorteilhaften Ausgestaltung der Erfindung wird bei der erfindungsgemäßen Regelung die Grundwelle der ermittelten Leistung- oder Strom- oder Spannungswerte maximiert und das Vorzeichen der Regelabweichung durch "Wobbeln" des Arbeitspunktes des regelbaren elektrischen und/oder optischen Laufzeitelementes ermittelt, d.h. es wird eine Regelung des regelbaren elektrischen und/oder optischen Laufzeitelementes nach dem analogen "Lock-In-Prinzip" oder mit Hilfe einer digitalen Steuerung durchgeführt.

Weitere vorteilhafte Ausgestaltungen des erfindungsgemäßen Verfahrens sind den weiteren Ansprüchen zu entnehmen.

Im folgenden werden Ausführungsbeispiele des erfindungsgemäßen Verfahrens anhand von zwei Prinzipschaltbildern und einem Diagramm näher erläutert.
- Figur 1: zeigt beispielhaft in einem Prinzipschaltbild eine Anordnung zur Erzeugung eines optischen RZ-Übertragungssignals mit der erfindungsgemäßen Phasenregelung,
- Figur 2: zeigt beispielhaft in einem weiteren Prinzipschaltbild eine alternative Anordnung zur Erzeugung eines optischen RZ-Übertragungssignals mit einer angepaßten erfindungsgemäßen Phasenregelung und
- Figur 3: zeigt beispielhaft in einem Diagramm den Zusammenhang zwischen der ermittelten Leistung des gefilterten elektrischen Signals und der Phasenfehlanpassung zwischen Pulsquelle und dem elektrischen Datensignal.

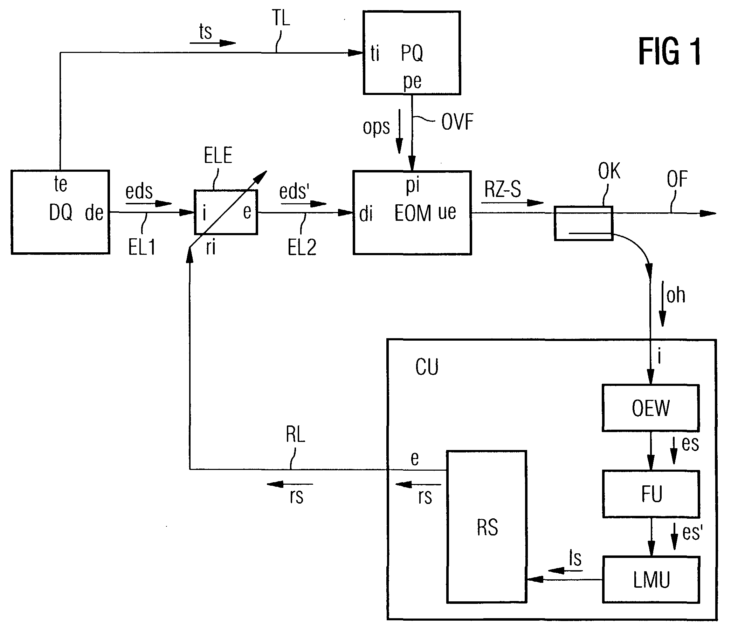

In Figur 1 ist beispielhaft in einem Prinzipschaltbild eine Anordnung zur Ereugung eines optischen RZ-Übertragungssignals RZ-S dargestellt, wobei zur erfindungsgemäßen phasensynchronen Zuführung eines optischen Pulssignals ops und eines elektrischen Datensignals eds eine Regeleinheit CU vorgesehen ist. Entsprechend sind in Figur 1 eine Datensignalquelle DQ, eine optische Pulssignalquelle PQ, ein regelbares elektrisches Laufzeitelement ELE, ein elektro-optischer Modulator EOM sowie eine optische Koppeleinheit OK dargestellt. Des weiteren weist die Regeleinheit CU eine opto-elektrische Wandlereinheit OEW, eine Filtereinheit FU, eine Leistungsermittlungseinheit LMU und eine Reglereinheit RS auf.

Die Datensignalquelle DQ weist einen Taktsignalausgang te und einen Datensignalausgang de auf, wobei der Taktsignalausgang te über eine Taktleitung TL mit dem Takteingang ti der Pulssignalquelle PQ und der Datenausgang de über eine erste elektrische Verbindungsleitung EL1 mit dem Eingang i des regelbaren elektrischen Laufzeitelementes ELE verbunden ist. Der Ausgang e des regelbaren elektrischen Laufzeitelementes ELE ist über eine zweite elektrische Verbindungsleitung EL2 mit dem Dateneingang di des elektro-optischen Modulators EOM verbunden, dessen Pulssignaleingang pi über eine optische Verbindungsfaser OVF an den Pulssignalausgang pe der Pulssignaleinheit PQ angeschlossen ist. Entsprechend ist der Übertragungssignalausgang ue des elektro-optischen Modulators EOM an die optische Übertragungsfaser OF angeschlossen, wobei diese über eine optische Koppeleinheit OK geführt ist. Die optische Koppeleinheit OK ist zusätzlich über eine optische Koppelfaser OKF mit dem Eingang i der Regeleinheit CU verbunden. Schließlich ist der Ausgang e der Regeleinheit CU über eine Regelleitung RL an den Regeleingang ri des regelbaren elektrischen Laufzeitelementes ELE angeschlossen.

Der Eingang i der Regeleinheit CU ist an die opto-elektrische Wandlereinheit OEW angeschlossen, welche mit der Filtereinheit FU verbunden ist. Desweiteren ist die Filtereinheit FU über die Leistungsermittlungseinheit LMU mit der Reglereinheit RS verbunden, welche an den Ausgang e der Regeleinheit CU angeschlossen ist.

In der Datensignalquelle DQ werden ein elektrisches Datensignal eds und ein Taktsignal ts erzeugt sowie an den Datenausgang de bzw. den Taktausgang te der Datensignalquelle DQ gesteuert. Vom Taktausgang te wird das Taktsignal ts über die Taktleitung TL an den Takteingang ti des Pulssignalquelle PQ übermittelt. Analog hierzu wird das elektrische Datensignal eds über die erste elektrische Leitung EL1 dem Eingang i des regelbaren elektrischen Laufzeitelementes ELE zugeführt sowie nach Korrektur bzw. Regelung dessen Laufzeit über den Ausgang e sowie über die zweite elektrische Leitung EL2 an den Dateneingang di des elektro-optischen Modulators EOM übermittelt.

In der Pulssignalquelle PQ wird gemäß dem durch das am Takteingang ti empfangenen Taktsignal ts ein optisches Pulssignal ops erzeugt, welches an den Pumpsignalausgang pe der Pumpsignalquelle PQ geführt wird. Vom Pumpsignalausgang pe wird das optische Pulssignal ops über die optische Verbindungsfaser OVF dem Pulssignaleingang pi des elektro-optischen Modulators EOM zugeführt. Innerhalb des elektro-optischen Modulators EOM wird das empfangene optische Pulssignal OPS mit dem empfangenen phasenangepassten elektrischen Datensignal eds' moduliert und somit das RZ-(Return to Zero)-Übertragungssignal RZ-S gebildet, das am Übertragungssignalausgang ue des elektro-optischen Modulators EOM ausgesendet wird. Vom Übertragungssignalausgang ue wird das RZ-Übertragungssignal RZ-S über die optische Übertragungsfaser OF und somit über die optische Koppeleinheit OK an die optische Empfangseinheit (in Figur 1 nicht dargestellt) übertragen.

Mit Hilfe der optischen Koppeleinheit OK wird ein Teil des optischen RZ-Übertragungssignales RZ-S ausgekoppelt und das auf diese Weise gewonnene optische Hilfssignal oh über eine optische Koppelfaser OKF an den Eingang i der Regeleinheit CU übermittelt. Das optische Hilfssignal oh wird innerhalb der Regeleinheit CU an die opto-elektrische Wandlereinheit OEW geführt, mit deren Hilfe das optische Hilfssignal oh in ein elektrisches Signal es umgesetzt wird. Das elektrische Signal es wird anschließend der Filtereinheit FU zugeführt und erfindungsgemäß aus dem elektrischen Signal es die der halben Datenrate entsprechende Frequenz bzw. die Spektralkomponente des elektrischen Signals es bei der halben Datenrate ausgefiltert. Dies beruht auf dem Effekt, daß bei einer bandpaßgefilterten optischen Pulsfolge im wesentlichen vom Datensignal, d.h. von dem RZ-Übertragungssignal RZ-S, der eine der halben Datenrate entsprechenden Frequenz aufweisende Sinusanteil verbleibt. Bei Phasensynchronisationsfehlern bzw. Phasenfehlanpassungen zwischen dem optischen Pulssignal ops und dem elektrischen Datensignal eds tritt eine Dämpfung der Pulsamplitude für gesendete "Einsen" und eine Erhöhung der gesendeten Pulsamplitude für gesendete "Nullen" auf, was zu enormen Problemen bei der Datensignalrekonstruktion am Ende der optischen Übertragungsstrecke führt.

Für die Realisierung der opto-elektrischen Wandlereinheit OEW ist beispielsweise eine schnelle Photodiode einsetzbar. Die Filtereinheit FU ist beispielsweise mittels eines Bandpaßfilters, das einen eng um die halbe Datenfrequenz begrenzten Durchlaßbereich aufweist möglich, wobei alternativ ein entsprechend schmalbandiger elektrischer Verstärker verwendet werden kann.

Das Spektrum des optischen RZ-Übertragungssignals RZ-S ändert sich charakteristisch mit dem Phasensynchronisationsfehler. Diese charakteristische Änderung wird erfindungsgemäß dazu ausgewertet, ein Regelsignal rs zur Regelung des regelbaren elektrischen Laufzeitelements ELE oder einer regelbaren optischen Laufzeitelementes OLE zu bilden. Hierzu wird beispielsweise die Leistung des gefilterten elektrischen Signals es' bei der halben Datenrate mit Hilfe der Leistungsermittlungseinheit LMU ermittelt und die ermittelte Leistung ls anhand eines Leistungssignals ls der Reglereinheit RS mitgeteilt. Alternativ können beispielsweise der Strom oder die Spannung des gefilterten elektrischen Signals es' ermittelt und ausgewertet werden.

In der Reglereinheit RS wird das Leistungssignal ls ausgewertet und entsprechend der ermittelten Leistungs- oder Strom- oder Spannungswerte ein Regelsignal rs gebildet, welches über den Ausgang e der Regeleinheit CU über die Regelleitung RL an den Regeleingang ri des elektrisch regelbaren Laufzeitelementes ELE übertragen wird. Mit Hilfe des Regelsignals rs wird die Laufzeit des elektrischen Datensignals eds geregelt bzw. die Phase des elektrischen Datensignals eds derart variiert, daß das optische Pulssignal ops und das elektrische Datensignal eds, welche beide hinsichtlich des elektrischen Taktsignals ts synchronisiert sind, dem elektro-optischen Modulator EOM phasensynchron zugeführt werden. Bei einer phasensynchronen Zuführung des optischen Pulssignals ops und des elektrischen Datensignals eds ist das optische RZ-Übertragungssignal RZ-S optimal "durchmoduliert".

Bei der erfindungsgemäßen Regelung wird beispielsweise die Grundwelle der ermittelten Leistungs- oder Strom- oder Spannungswerte maximiert, wobei das Vorzeichen der Regelabweichung durch Wobbeln (periodisches Ändern der Laufzeitverschiebung um einen kleinen Betrag mit Hilfe von Wobbel-Spannungen) ermittelt wird, d.h. es wird die optimale Einstellung des Arbeitspunktes des regelbaren elektrischen Laufzeitelementes ELE entweder durch die Anwendung eines analogen "Lock-In-Prinzips" oder digital gesteuert durchgeführt.

Als regelbares elektrisches Laufzeitelement ELE ist beispielsweise ein elektrisch einstellbarer breitbandiger Phasenschieber einsetzbar. Erfindungsgemäß ist anstelle des regelbaren elektrischen Laufzeitelementes ELE ein optisch regelbares Laufzeitelement OLE - in Figur 1 nicht explizit dargestellt - vorsehbar, das zwischen der optischen Pulssignalquelle PQ und dem elektro-optischen Modulator EOM eingeschaltet ist. Mit Hilfe des optisch regelbaren Laufzeitelementes OLE wird die Laufzeit des optischen Pulssignals ops geregelt und somit eine phasensynchrone Zuführung des optischen Pulssignals ops und des elektrischen Datensignals eds an den elektro-optischen Modulator EOM realisiert. Hierbei sind gemäß der Erfindung mehrere Varianten möglich. Beispielsweise können sowohl das elektrische Datensignal eds mit Hilfe des regelbaren elektrischen Laufzeitelementes ELE als auch das optische Pulssignal ops mit Hilfe des regelbaren optischen Laufzeitelementes OLE nahezu gleichzeitig hinsichtlich ihrer Phase geregelt werden, um eine optimale phasensynchrone Zuführung beider Signale an den elektro-optischen Modulator EOM zu gewährleisten. Analog zum vorgestellten Ausführungsbeispiel wird auch das regelbare optische Laufzeitelement OLE mit Hilfe des in der Regeleinheit CU erzeugten Regelsignals rs geregelt.

Des weiteren ist alternativ zur Regelung des elektrischen Datensignales eds auch die Regelung der Phase des elektrischen Taktsignals ts denkbar, wozu ein weiteres bzw. das regelbare elektrische Laufzeitelement ELE zwischen der Datensignalquelle DQ und der Pulssignalquelle PQ zur Regelung der Phase des Taktsignales ts eingeschaltet wird. Wiederum umfaßt das erfindungsgemäße Verfahren auch die Regelung sowohl des elektrischen Datensignal eds als auch des Taktsignals ts mit Hilfe von einem ersten und zweiten regelbaren elektrischen Laufzeitelement ELE - nicht in Figur 1 dargestellt.

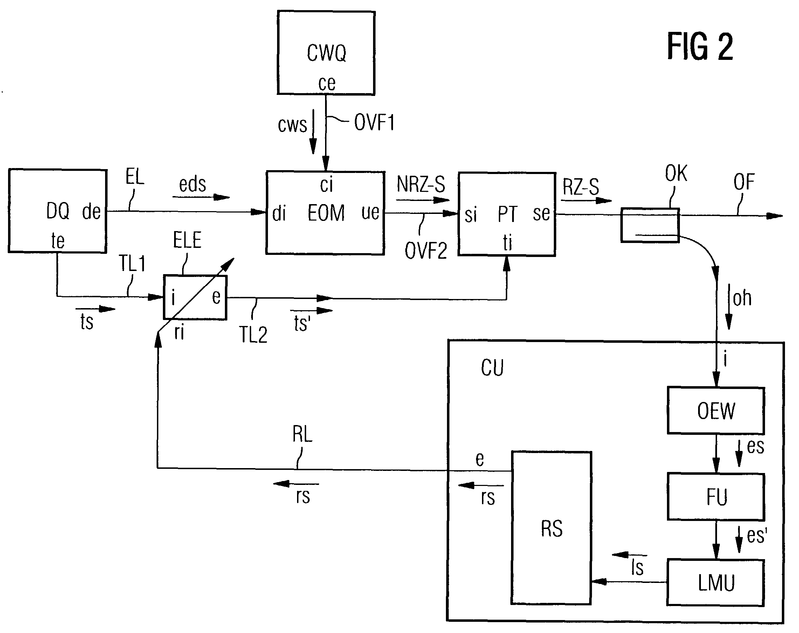

In Figur 2 ist beispielhaft in einem weiteren Prinzipschaltbild eine alternative Anordnung zur Erzeugung eines optischen RZ-Übertragungssignals RZ-S dargestellt, welche im Vergleich zu dem in Figur 1 dargestellten Ausführungsbeispiel anstelle der Pulssignalquelle PQ eine optische Konstantsignalquelle CWQ sowie einen Pulstransformator PT aufweist. Vorteilhaft bei diesem Verfahren ist, dass damit existierende NRZ-Sender au RZ-Format nachrütbar sind durch eine Baugruppe, die ELE, PT und CU umfasst. Die Datensignalquelle DQ weist wiederum einen Taktausgang te sowie einen Datenausgang de aus, wobei der Taktausgang te über eine erste Taktleistung TL1 mit dem Eingang i des elektrisch regelbaren Laufzeitelementes ELE und der Datenausgang de über die elektrische Leitung EL mit dem Dateneingang di des elektro-optischen Modulators EOM verbunden ist.

Der Ausgang e des regelbaren elektrischen Laufzeitelements ELE ist über eine zweite Taktleitung TL2 an den Takteingang ti des Pulstransformers PT angeschlossen. Entsprechend ist die Konstantsignalquelle CWQ über deren Konstantsignalausgang ce sowie über eine erste optische Verbindungsfaser OVF1 an den Konstantsignaleingang ci des elektro-optischen Modulators EOM angeschlossen. Der Übertragungssignalausgang ue des elektro-optischen Modulators EOM ist über eine zweite optische Verbindungsfaser OVF2 mit dem Signaleingang si des Pulstransformators PT verbunden, dessen Signalausgang se an die optische Übertragungsfaser OF geführt ist. Analog zu dem in Figur 1 dargestellten Ausführungsbeispiel wird die optische Übertragungsfaser OF über eine optische Koppeleinheit OK zu einer in Figur 2 ebenfalls nicht dargestellten optischen Empfangseinheit geführt, wobei die optische Koppeleinheit OK über eine optische Koppelfaser OKF mit dem Eingang i der Regeleinheit CU verbunden ist. Der Ausgang e der Regeleinheit CU ist analog zu Figur 1 über eine Regelleitung RL mit dem Regeleingang ri des regelbaren elektrischen Laufzeitelements ELE verbunden.

Die in Figur 2 dargestellte Regeleinheit CU ist analog zu der in Figur 1 dargestellten Regeleinheit CU aufgebaut, d.h. in der Regeleinheit CU sind eine opto-elektrische Wandlereinheit OEW, eine Filtereinheit FU, eine Leistungsermittlungseinheit LMU und eine Reglereinheit RS vorgesehen.

Im Gegensatz zu der Erzeugung eines RZ-Übertragungssignals RZ-S gemäß dem Ausführungsbeispiel in Figur 1 wird bei der erfindungsgemäß alternativen Variante mit Hilfe des elektro-optischen Modulators EOM zunächst ein NRZ-(Non-return-to-zero)-Übertragungssignal gebildet, welches mit Hilfe des Pulstransformators PT in ein RZ-Übertragungssignal RZ-S gewandelt bzw. transformiert wird. Hierzu wird in der Datensignalquelle DQ ein elektrisches Datensignal eds sowie ein elektrisches Taktsignal ts gebildet. Das elektrische Datensignal eds wird von der Datensignalquelle DQ über die elektrische Leitung EL an den Dateneingang di des elektro-optischen Modulators EOM übermittelt. Entsprechend wird das Taktsignal ts von der Datensignalquelle DQ über die erste Taktleitung TL1 an den Eingang i des elektrisch regelbaren Laufzeitelements ELE gesteuert. Das Taktsignal ts wird mit Hilfe des regelbaren elektrischen Laufzeitelements ELE hinsichtlich seiner Laufzeit variiert bzw. phasenkorrigiert sowie das phasen-korrigierte Taktsignal ts' vom Ausgang e des regelbaren elektrischen Laufzeitelementes ELE über die zweite Taktleitung TL2 an den Takteingang ti des Pulstransformers PT übertragen.

In der Konstantsignalquelle CWQ wird ein optisches Signal cws gebildet und vom Konstantsignalausgang ce über die erste optische Verbindungsfaser OVF1 an den Konstantsignaleingang ci des elektro-optischen Modulators EOM übermittelt. Das optische Signal cws wird mit Hilfe des an den elektro-optischen Modulator EOM gesteuerten elektrischen Datensignals eds moduliert und somit ein optisches NRZ-Übertragungssignal NRZ-S erzeugt, welches vom Übertragungssignalausgang ue des elektro-optischen Modulators EOM über die zweite optische Verbindungsfaser OVF2 an den Signaleingang si des Pulstransformers ausgesendet wird. Mit Hilfe des Pulstransformers PT wird das optische NRZ-Übertragungssignal NRZ-S in ein optisches RZ-Übertragungssignal RZ-S gewandelt bzw. transformiert, welches am Signalausgang se ausgesendet wird. Ein Teil des über die optische Übertragungsfaser OF übertragenen optischen RZ-Übertragungssignals RZ-S wird mit Hilfe der optischen Koppeleinheit OK ausgekoppelt und als optisches Hilfssignal oh über die optische Koppelfaser OKF an den Eingang i der Regeleinheit CU übertragen. Analog zu dem in Figur 1 beschriebenen erfindungsgemäßen Regelungsverfahren wird aus dem optischen Hilfssignal oh ein Regelsignal rs ermittelt, welches zur Regelung des regelbaren elektrischen Laufzeitelements ELE dessen Regeleingang ri zugeführt wird.

Alternativ zu dem in Figur 1 dargestellten Ausführungsbeispiel wird bei dem in Figur 2 dargestellten Ausführungsbeispiel die phasensynchrone Zuführung eines elektrischen Datensignals eds an einen elektro-optischen Modulator EOM und/oder des in dem elektro-optischen Modulator EOM aus einem optischen Signal cws und dem elektrischen Datensignal eds erzeugten optischen NRZ-Übertragungssignals NRZ-S an den Pulstransformer PT, der das NRZ-Übertragungssignal in ein optisches RZ-Übertragungssignal RZ-S transformiert, geregelt, wobei der Pulstransformer PT mit dem elektrischen Datensignal eds über ein elektrisches Taktsignal ts synchronisiert ist. Das elektrische Taktsignal ts wird erfindungsgemäß im dargestellten Ausführungsbeispiel einer Phasenkorrektur mit Hilfe des regelbaren elektrischen Laufzeitelements ELE unterzogen, so daß die erfindungsgemäße phasensynchrone Zuführung realisiert werden kann.

Alternativ kann bei dem in Figur 2 dargestellten Ausführungsbeispiel das elektrische Datensignal eds hinsichtlich seiner Phasenlage mit Hilfe eines elektrisch regelbaren Laufzeitelementes ELE geregelt werden sowie mit Hilfe eines regelbaren optischen Laufzeitelements OLE eine Regelung des im elektro-optischen Modulator EOM gebildeten NRZ-Übertragungssignals NRZ-S durchgeführt werden. Bei einer derartigen Regelung wird das optisch regelbare Laufzeitelement OLE - in Figur 2 nicht dargestellt - zwischen dem elektro-optischen Modulator EOM und dem Pulstransformer PT eingeschaltet, wodurch das optische NRZ-Übertragungssignal NRZ-S eine Regelung hinsichtlich seiner Phase erfährt. Somit kann alternativ die phasensynchrone Zuführung des optischen Pulssignals ops in Figur 1 oder die phasensynchrone Zuführung des optischen NRZ-Übertragungssignales NRZ-S in Figur 2 mit Hilfe eines regelbaren optischen Laufzeitelementes OLE erfindungsgemäß durchgeführt werden.

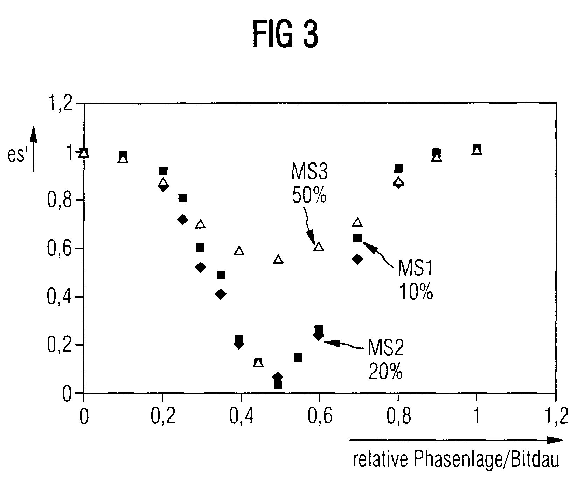

In Figur 3 ist beispielhaft in einem Diagramm der Zusammenhang zwischen der Leistung des gefilterten elektrischen Signals es' bei der halben Datenrate und der Phasenfehlanpassung zwischen der Phase des optischen Pulssignals ops und des elektrischen Datensignals eds dargestellt, wobei ein erstes, zweites und drittes, sich jeweils hinsichtlich der relativen Pulsdauer des optischen Pulssignals ops unterscheidende Meßsignale MS1,MS2,MS3 angeführt sind.

Das erste Meßsignal MS1 weist eine 10%-ige, das zweite Meßsignal MS2 eine 20%-ige und das dritte Meßsignal eine 50%-ige relative Pulsdauer auf, die Bezugsgröße für die relative Pulsdauer ist die Zeitdauer zwischen zwei aufeinanderfolgenden übertragenen Bits. Das erste Meßsignal ist durch quadrat-förmige Meßpunkte, das zweite Meßsignal MS2 durch rautenförmige Meßpunkte und das dritte Meßsignal MS3 durch dreieckförmige Meßpunkte dargestellt. Entlang der Ordinate ist die relative Phasenlage pro Bitdauer in normierter Form und entlang der Abszisse die normierte Leistung des gefilterten elektrischen Signals es' bei der halben Datenrate angetragen.

Aus dem Diagramm in Figur 3 wird deutlich, dass bei einer phasensynchronen Zuführung des optischen Pulssignals ops und des elektrischen Datensignals eds an den elektro-optischen Modulator EOM die bei der halben Datenrate ermittelte Leistung des elektrischen Signals es' ein Maximum aufweist, d.h. bei den Ordinatenwerten 0 und 1 wird das Maximum der normierten Leistung des elektrischen Signals es' erreicht. Mit zunehmender Phasenfehlanpassung nimmt die Leistung des gefilterten elektrischen Signals es' zunehmend ab, bis diese schließlich beim normierten Ordinatenwert 0,5 ein Minimum annimmt, d.h. die Phasen des elektrischen Datensignals eds und des optischen Pulssignals ops sind um eine halbe Periode gegeneinander verschoben. Dieses Minimum ist wiederum stark abhängig von der relativen Pulsdauer des optischen Pulssignals ops. So zeigt das Diagramm deutlich, daß beispielsweise bei einer 10%-igen relativen Pulsdauer des ersten Meßsignals MS1 die Leistung des gefilterten elektrischen Signals es' nahezu einen Leistungswert 0 annimmt. Ebenso nähert sich die Leistung des gefilterten elektrischen Signals es' des zweiten Meßssignals MS2 bei dem Ordinatenwert 0,5 ebenfalls dem Wert 0 an. Im Gegensatz hierzu nimmt das dritte Meßsignal MS3, welches eine 50%-ige relative Pulsdauer aufweist, bei dem betrachteten Ordinatenwert 0,5 ein Minimum von 0,55 der normierten Leistung des gefilterten elektrischen Signals es' an.

Bei einer Phasenverschiebung um eine komplette Periode, welche dem normierten Ordinatenwert 1 der relativen Phasenlage pro Bitdauer entspricht, weisen das erste, zweite und dritte Meßsignal wiederum ein Maximum der Leistung des gefilterten elektrischen Signals es' auf.

Aus dem in Figur 3 dargestellten Zusammenhang wird deutlich, wie erfindungsgemäß aus den ermittelten Leistung- oder Spannungs- oder des Stromwerten des gefilterten elektrischen Signals es' bei der halben Datenübertragungsrate ein Synchronisationskriterium für die Regelung des elektrischen oder optischen regelbaren Laufzeitelementes ELE, OLE gewonnen werden kann, welches zur Bildung eines Regelsignals rs für die erfindungsgemäße Regelung ausgewertet wird.

## Patentansprüche

1. Verfahren zur phasensynchronen Zuführung eines optischen Pulssignals (ops) und eines elektrischen Datensignals (eds), die hinsichtlich eines elektrischen Taktsignals (ts) synchronisiert sind, an einen elektro-optischen Modulator (EOM) zur Erzeugung eines optischen RZ(Return-to-Zero)-Übertragungssignals (RZ-S),
**dadurch gekennzeichnet,**
**daß** ein Teil des optischen RZ-Übertragungssignals (RZ-S) ausgekoppelt wird,
**daß** der ausgekoppelte Teil des optischen RZ-Übertragungssignals (oh) in ein elektrisches Signal (es) umgesetzt wird, **daß** die Leistung oder der Strom oder die Spannung des elektrischen Signals (es) in einem schmalen Frequenzband um die der halben Datenrate entsprechenden Frequenz bestimmt wird, **daß** anhand der ermittelten Leistung- oder Strom- oder Spannungwerte die phasensynchrone Zuführung des optischen Pulssignals (ops) und/oder des elektrischen Datensignals (eds) geregelt wird.

2. Verfahren zur phasensynchronen Zuführung eines elektrischen Datensignals (eds) an einen elektro-optischen Modulator (EOM) und/oder des in dem elektro-optischen Modulator (EOM) aus einem optischen Signal (cws) und dem elektrischen Datensignal (eds) erzeugten optischen NRZ(Non-Return-to-Zero)Übertragungssignals (NRZ-S) an einen Pulstransformer (PT), der das optische NRZ-Übertragungssignal (NRZ-S) in ein optisches RZ(Return-to-Zero)-Übertragungssignal (RZ-S) transformiert, wobei der Pulstransformer (PT) mit dem elektrischen Datensignal (eds) über ein elektrisches Taktsignal (ts) synchronisiert ist,
**dadurch gekennzeichnet,**
**daß** ein Teil des optischen RZ-Übertragungssignals (RZ-S) ausgekoppelt wird,
**daß** der ausgekoppelte Teil des optischen RZ-Übertragungssignals (oh) in ein elektrisches Signal (es) umgesetzt wird, **daß** die Leistung oder der Strom oder die Spannung des elektrischen Signals (es) in einem schmalen Frequenzband um die der halben Datenrate entsprechenden Frequenz bestimmt wird, **daß** anhand der ermittelten Leistung- oder Strom- oder Spannungwerte die phasensynchrone Zuführung des optischen NRZ-Übertragungssignals (NRZ-S) und/oder des elektrischen Datensignals (eds) geregelt wird.

3. Verfahren nach Anspruch 1 oder 2,
**dadurch gekennzeichnet,**
**daß** die phasensynchrone Zuführung des optischen Pulssignals (ops) oder des optischen NRZ-Übertragungssignals (NRZ-S) mit Hilfe eines regelbaren optischen Laufzeitelements (OLE) geregelt wird.

4. Verfahren nach Anspruch 1 oder 2,
**dadurch gekennzeichnet,**
**daß** die phasensynchrone Zuführung des elektrischen Datensignals (eds) und/oder des elektrischen Taktsignals (ts) mit Hilfe eines regelbaren elektrischen Laufzeitelements (ELE) geregelt wird.

5. Verfahren nach Anspruch 3 und 4,
**dadurch gekennzeichnet,**
**daß** anhand der ermittelten Leistung- oder Strom- oder Spannungwerte mindestens ein Regelsignal (rs) gebildet wird, daß dem regelbaren elektrischen Laufzeitelementen (ELE) und/oder dem regelbaren optischen Laufzeitelementen (OLE) zugeführt wird.

6. Verfahren nach einem der Ansprüche 1 bis 5 ,
**dadurch gekennzeichnet,**
**daß** die Bestimmung der Leistung oder des Stromes oder der Spannung des elektrischen Signals (es) für die der halben Datenrate entsprechenden Frequenz mit Hilfe eines elektrischen Bandpaßfilters (FU) oder mit Hilfe eines schmalbandigen elektrischen Verstärkers durchgeführt wird.

7. Verfahren nach einem der Ansprüche 1 bis 6,
**dadurch gekennzeichnet,**
**daß** der ausgekoppelte Teil des optischen RZ-Übertragungssignals (RZ-S) mit Hilfe eines opto-elektrischen Wandlers (OEW), insbesondere einer Photodiode, in ein elektrisches Signal (es) umgesetzt wird.

8. Verfahren nach Anspruch 3 und 4,
**dadurch gekennzeichnet,**
**daß** mit Hilfe des regelbaren elektrischen Laufzeitelements (ELE) die Laufzeit des elektrischen Datensignals (eds) und/oder des elektrischen Taktsignals (ts) und/oder mit Hilfe des regelbaren optischen Laufzeitelementes (OLE) die Laufzeit des optischen Pulssignals (ops) vor der Zuführung an den elektro-optischen Modulator (EOM) variiert wird.

9. Verfahren nach Anspruch 3 und 4,
**dadurch gekennzeichnet,**
**daß** mit Hilfe des regelbaren elektrischen Laufzeitelements (ELE) die Laufzeit des elektrischen Datensignals (eds) und/oder des elektrischen Taktsignals (ts) und/oder mit Hilfe des regelbaren optischen Laufzeitelementes (OLE) die Laufzeit des optischen NRZ-Übertragungssignals (NRZ-S) vor der Transformation durch den optischen Pulstransformer (PT) variiert wird.

10. Verfahren nach einem der Ansprüche 1 bis 9,
**dadurch gekennzeichnet,**
**daß** bei der Regelung die Grundwelle der ermittelten Leistungoder Strom- oder Spannungswerte maximiert wird.

11. Verfahren nach Anspruch 10,
**dadurch gekennzeichnet,**
**daß** das Vorzeichen der Regelabweichung durch "Wobbeln" des Arbeitspunktes des regelbaren elektrischen und/oder optischen Laufzeitelements (ELE,OLE) ermittelt wird, d.h.
**daß** die Regelung des regelbaren elektrischen und/oder optischen Laufzeitelements (ELE,OLE) nach dem analogen "Lock-In-Prinzip" oder mit Hilfe einer digitalen Steuerung durchgeführt wird.

12. Verfahren nach einem der Ansprüche 1 bis 11,
**dadurch gekennzeichnet,**
**daß** das regelbare elektrische Laufzeitelement (ELE) als elektrisch einstellbarer, breitbandiger Phasenschieber realisiert wird.
